(19) **Europäisches Patentamt / European Patent Office / Office européen des brevets**

(11) **EP 3 608 432 A1**

(12) # EUROPEAN PATENT APPLICATION
published in accordance with Art. 153(4) EPC

(43) Date of publication:
**12.02.2020 Bulletin 2020/07**

(21) Application number: **17904483.9**

(22) Date of filing: **04.04.2017**

(51) Int Cl.:
*C22C 38/00* (2006.01)  *B23K 35/30* (2006.01)
*C22C 38/14* (2006.01)  *C22C 38/58* (2006.01)

(86) International application number:
**PCT/JP2017/014134**

(87) International publication number:
**WO 2018/185853 (11.10.2018 Gazette 2018/41)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Nippon Steel Corporation**
**Tokyo 1008071 (JP)**

(72) Inventors:
• **FUJIYAMA, Naoto**
 **Tokyo 100-8071 (JP)**
• **KOJIMA, Kazuhiro**
 **Tokyo 100-8071 (JP)**
• **SHINOHARA, Yasuhiro**
 **Tokyo 100-8071 (JP)**

(74) Representative: **Vossius & Partner**
**Patentanwälte Rechtsanwälte mbB**
**Siebertstrasse 3**
**81675 München (DE)**

(54) **VERTICAL-SEAM-WELDED STEEL PIPE**

(57) The present invention relates to steel pipe excellent in toughness of the weld metal part at a low temperature obtained by submerged arc welding in the longitudinal direction from both the inside and outside surfaces having strengths of the X60 to X70 class. The steel pipe of the present invention is a pipe having weld zones welded in a longitudinal direction at an inside surface and outside surface, wherein the tensile strength of the base metal is 480 to 620 MPa, the weld metal has a predetermined composition of constituents, when %X expresses a content of an element X in the weld metal, Pcm defined by
$Pcm = \%C + \%Si/30 + (\%Mn + \%Cu + \%Cr)/20 + \%Ni/60 + \%Mo/15 + \%V/10 + 5\%B$ is 0.2% or less, Ceq defined by $Ceq = \%C + \%Mn/6 + (\%Cr + \%Mo + \%V)/5 + (\%Ni + \%Cu)/15$ is 0.35 to 0.45%, and $\alpha'$ defined by $\alpha' = (1.5 \times (\%O - 0.89\%Al) + 3.4 \times \%N - \%Ti) \times 1000$ is -20 to 40, and %Al/%O is 0.3 to 0.8.

**FIG. 1**

EP 3 608 432 A1

**Description**

FIELD

The present invention relates to steel pipe which is welded by submerged arc welding in the longitudinal direction from the inside and outside surfaces and which has a strength of the API5L X60 to X70 class (standard minimum yield strengths of 413 MPa and 482 MPa).

BACKGROUND

As a method of long distance transport of crude oil and natural gas, line pipe is rising in importance. As the trunk line pipe for long distance transport, the American Petroleum Institute (API) 5L standard X65 (standard minimum yield strength of 448 MPa) has become the basis of design. The actual amount of use is also great.

Steel pipe for line pipe use is generally manufactured by shaping steel plate and seam welding the abutting parts of the steel plate in the longitudinal direction from the inside and outside surfaces. The seam welding is usually completed by tack welding part of the groove by gas metal arc welding, then using submerged arc welding to weld the steel pipe one layer at a time from the inside surface and outside surface. The tack welding is completely erased by the subsequently performed submerged arc welding.

As examples of the thus produced steel pipe, UOE steel pipe and JCOE steel pipe may be mentioned. The welded joints of line pipe are being required to be made higher in toughness from the viewpoint of improvement of the transport efficiency due to the colder drilling sites and higher pressures.

PTL 1 relates to API standard X65 to X70 class welded steel pipe and discloses making the weld metal a fine acicular ferrite structure obtained by transformation using a large number of TiO as nuclei and achieving both high strength and excellent toughness.

[CITATIONS LIST]

[PATENT LITERATURE]

[PTL 1] Japanese Unexamined Patent Publication No. 2013-49895

SUMMARY

[TECHNICAL PROBLEM]

Steel pipe for line pipe use is frequently used for deep sea oil wells and cold locations and is being made increasingly thicker. To weld thick steel plate, large heat input welding like submerged arc welding is necessary. In large heat input welding, generally the drop in toughness of the heat affected zone (below, referred to as the "HAZ") is a problem requiring solution.

The present invention covers longitudinal seam welded steel pipe having an API standard X60 to X70 class strength obtained by shaping thickness 6 to 40 mm thick steel plate and having weld zones seam welded in the longitudinal direction from the inside and outside surfaces and has as its technical problem to obtain steel pipe with excellent toughness of the weld metal part at a low temperature even if making the steel pipe by welding thick steel plate by a welding heat input of 15 to 110 kJ/cm.

[SOLUTION TO PROBLEM]

In submerged arc welding, the constituents of the weld metal of the longitudinal seam part are affected by dilution by the base metal, so the constituents of the weld metal part have to be designed matching the constituents of the base metal. Specifically, control of the amount of Al, the amount of Ti, the amount of O, and the amount of N becomes important.

The microstructure of the weld metal is substantially determined by the amounts of alloying elements. If considering the constituents of the base metal, if the base metal has a X60 to X70 class strength, the weld metal is given a structure of mainly acicular ferrite. Note that, if the strength of the base metal becomes higher, the weld metal is given a bainite structure. If the strength of base metal is the X60 to X70 class, to improve the toughness of the weld metal part, for example, it is necessary to conduct studies under design thinking different from the case where the strength of the base metal is of the X80 class.

The inventors discovered that by making constituents of weld metal considering the effect of dilution by the base metal be suitable and further by making a parameter α', which is found based on the stoichiometric ratios of Al, O, Ti, and N and shows the effective ability to form acicular ferrite, and the ratio of the amount of Al and the amount of O be suitable values corresponding to the amount of O in the weld metal, it is possible to improve the toughness of the weld metal part. They further proceeded with studies and completed the present invention. The gist is as follows:

(1) A longitudinal seam welded steel pipe having weld zones welded at an inside surface and outside surface in a longitudinal direction, , a chemical composition of a base metal of the steel pipe containing, by mass%, C: 0.01 to 0.1%, Si: 0.03 to 0.5%, Mn: 0.5 to 2.0%, P: 0.015% or less, S: 0.01% or less, Al: less than 0.01%, Ti: 0.005 to 0.03%, N: 0.002 to 0.006%, O: 0.005% or less, Mg: 0 to 0.01%, Ca: 0 to 0.005%, Ni: 0 to 0.6%, Cr: 0 to 0.5%, Cu: 0 to 0.5%, Mo: 0 to 0.4%, Nb: 0 to 0.06%, B: 0 to 0.002%, V: 0 to 0.06% and a balance of Fe and impurities, the tensile strength of the base metal being 480 to 620 MPa, the chemical composition of a weld metal of the steel pipe containing, by mass%, C: 0.03 to 0.1%, Si: 0.03 to 0.5%, Mn: 0.5 to 2.0%, P: 0.015% or less, S: 0.01% or less, Al: 0.001 to 0.03%, Ti: 0.005 to 0.04%, N: 0.002 to 0.006%, B: 0 to 0.035%, O: 0.015 to 0.055%, Ni: 0 to 0.6%, Cr: 0 to 0.5%, Cu: 0 to 0.5%, Mo: 0 to 0.4%, V: 0 to 0.06%, Ca: 0 to 0.005%, Mg: 0 to 0.01%, Nb: 0 to 0.06% and a balance of Fe and impurities, wherein when %X expresses a content of an element X in the weld metal, Pcm defined by $Pcm=\%C+\%Si/30+(\%Mn+\%Cu+\%Cr)/20+\%Ni/60+\%Mo/15+\%V/10+ 5\%B$ is 0.2% or less, Ceq defined by $Ceq=\%C+\%Mn/6+(\%Cr+\%Mo+\%V)/5+(\%Ni+ \%Cu)/15$ is 0.35 to 0.45, α' defined by $\alpha'=(1.5\times(\%O-0.89\%Al)+3.4\times\%N-\%Ti)\times1000$ satisfies $1000\times\%O-10\leq\alpha'\leq1000\times\%O+1$, and %Al/%O satisfies 0.3 to 0.8.
(2) The longitudinal seam welded steel pipe according to (1), wherein the structure of the weld metal comprises, by area ratio, acicular ferrite 70% or more, grain boundary ferrite 15% or less, and martensite-austenite constituent 3% or less.
(3) The longitudinal seam welded steel pipe according to (1) or (2), wherein a tensile strength of the weld metal is 1.05 times or more of the tensile strength of the base metal.
(4) The longitudinal seam welded steel pipe according to any one of (1) to (3), wherein a Charpy absorption energy of the weld metal at -10°C is 100J or more.
(5) The longitudinal seam welded steel pipe according to any one of (1) to (4), wherein a Charpy absorption energy of the weld metal at $1300\times\%O-60$(°C) is 100J or more.

[ADVANTAGEOUS EFFECTS OF INVENTION]

According to the present invention, it is possible to obtain longitudinal seam welded steel pipe such as UOE steel pipe and JCOE steel pipe having a strength of the API standard X60 to X70 class and excellent in toughness of the weld metal part at a low temperature.

BRIEF DESCRIPTION OF DRAWINGS

FIG. 1 gives views explaining amounts in the weld metal and low temperature toughness, wherein (a) shows the relationship between the amount of O and α' and (b) shows the relationship between α' and the absorption energy at -10°C.
FIG. 2 gives examples of structures of the weld metal, wherein (a) and (b) show the structures of the weld metal of longitudinal seam welded steel pipes of the present invention and (c) and (d) show the structures of the weld metal of longitudinal seam welded steel pipes of conventional examples.

DESCRIPTION OF EMBODIMENTS

Below, embodiments of the present invention will be explained in detail.
To start, the chemical composition of the weld metal will be explained. Note that, below, the "%" relating to the chemical composition will be deemed to indicate "mass%".

C: 0.03 to 0.10%

C is an element required for securing strength of steel. 0.03% or more must be contained. If the amount of C is large, at the weld seam part, weld high temperature cracking easily occurs, so the upper limit is made 0.10%. C is preferably 0.05% to 0.065%.

Si: 0.03 to 0.50%

Si prevents blowholes, so 0.03% or more must be contained. If the amount of S is large, martensite-austenite constituent easily form, and low temperature toughness is made to remarkably deteriorate, so the upper limit is made 0.50%. Si is preferably 0.15% to 0.25%.

Mn: 0.5 to 2.0%

Mn acts as an element improving the hardenability. To make the weld metal a structure of mainly acicular ferrite, 0.5% or more has to be contained. If the amount of Mn is large, coarse MnS is formed and becomes starting points of fracture, so the upper limit is made 2.0%. Mn is preferably 1.2% to 1.5%.

P: 0.015% or less (including 0%)

S: 0.010% or less (including 0%)

P and S are both impurities and elements causing deterioration of the toughness of the joint. P is restricted to 0.015% or less, while S is restricted to 0.010% or less. The contents of these are preferably as low as possible. Preferably, P is 0.008% or less. Preferably, S is 0.003% or less.

Al: 0.001 to 0.030%

Al acts as a deoxidizing element and is necessary for control of the amount of oxygen for causing dispersion of the Ti oxides effective as sites for formation of acicular ferrite nuclei. If considering dilution by the base metal, 0.001% or more has to be contained. If the amount of Al is over 0.030%, formation of oxides is inhibited and the toughness cannot be secured, so the upper limit is made 0.030%. Preferably, the content is 0.010% to 0.015%.

Ti: 0.005 to 0.040%

Ti reacts with the oxygen in the weld metal to form Ti oxides acting as nuclei for acicular ferrite. These oxides are made to finely disperse in large numbers in the weld metal, so 0.005% or more has to be contained. If the amount of Ti becomes excessive, the Ti oxides agglomerate and coarsen and the ability to form nuclei of acicular ferrite falls. Further, the Ti oxides become starting points of fracture resulting in toughness not being able to be obtained, so the upper limit is made 0.040%. Preferably, the content is 0.009% to 0.015%.

N: 0.002 to 0.006%

N is an element effective for adjusting the amount of Ti effective for forming acicular ferrite structures, so 0.002% or more has to be contained. However, if over 0.006%, the solid solution N remaining without reacting with the Ti causes the toughness to remarkably fall, so the upper limit is preferably made 0.006%. Preferably, the content is 0.003% to 0.004%.

B: 0 to 0.035% or less

B promotes the formation of acicular ferrite by B in the solid solution state suppressing the formation of grain boundary ferrite of the weld metal. B need not be contained, but to obtain this effect, 0.0001% or more is preferably contained. If the amount of B exceeds 0.035, the strength becomes too high and the toughness falls, so the upper limit is made 0.035%. B may be added to the weld metal from any of the thick plate base metal, flux, or wire. For example, if the base metal is steel to which B is not added, a flux containing B oxides may be used. B is preferably 0.0005% to 0.010%.

O: 0.015 to 0.055%

O is an element required for forming oxides acting as nuclei for acicular ferrite. For this reason, 0.015% or more has to be contained. If the amount of O is over 0.055%, the toughness falls due to the excessive formation, agglomeration, and coarsening of the oxides, so the upper limit is made 0.055%. Preferably, the content is 0.020% to 0.030%.

Ni: 0 to 0.60%

Ni is an element able to improve the strength of the weld metal without causing a drop in the toughness. Ni is not necessarily contained. If exceeding 0.60%, the effect becomes saturated, so the upper limit is made 0.60%.

Cr: 0 to 0.50%

Cr is an element able to improve the strength of the weld metal. Inclusion of Cr is not essential. If over 0.50%, the effect becomes saturated, so the upper limit is made 0.50%.

Cu: 0 to 0.50%

Cu is an element able to improve the strength of the weld metal. Inclusion of Cu is not essential. If over 0.50%, the effect becomes saturated, so the upper limit is made 0.50%.

Mo: 0 to 0.40%

Mo is an element able to improve the strength of the weld metal. Inclusion of Mo is not essential. If over 0.40%, the effect becomes saturated, so the upper limit is made 0.40%.

V: 0 to 0.06%

V is an element able to improve the strength of the weld metal. Inclusion of V is not essential. If over 0.06%, the effect becomes saturated, so the upper limit is made 0.06%.

Ca: 0 to 0.005%

Ca is an element effective for improvement of the ductility and refinement of the structure by control of the morphology. Inclusion of Ca is not essential. If the amount of Ca is large, the sulfides and oxides become coarser and the ductility and toughness deteriorate, so the upper limit is made 0.005%.

Mg: 0 to 0.010%

Mg forms MgS or $MgAl_2O_4$ which act as pinning particles. Inclusion of Mg is not essential. To suppress growth of austenite grains at the weld metal, 0.001% or more is preferably included. If over 0.010%, the effect becomes saturated, so the upper limit is made 0.01%. Preferably, the content is 0.0015% to 0.0025%.

Nb: 0 to 0.06%

Nb is an element effective for causing the presence of solid solution B effective for improving the strength and suppressing grain boundary ferrite. Inclusion of Nb is not essential. If the amount of Nb exceeds 0.06%, martensite islands easily form and the toughness falls, so the upper limit is made 0.06%. Preferably, the content is 0.02%.
The balance of the weld metal is Fe and impurities. The impurities mean constituents entering from the weld wire, flux, steel plate, surrounding atmosphere, etc. in the process of welding and mean constituents not intentionally contained.
Specifically, P, S, N, Sb, Sn, W, Co, As, Pb, Bi, and H may be mentioned. Among these, P and S, as explained above, have to be controlled so that P: 0.015% or less and S: 0.01% or less.
Regarding other elements, usually Sb, Sn, W, Co, and As may be contained in 0.1% or less, Pb and Bi may be contained in 0.005% or less, and H may be contained in 0.0005% or less as unavoidable impurities, but if in the usual ranges, do not have to be particularly controlled.
The constituents of the weld metal in the present embodiment further have to satisfy the relationships explained below.

Pcm: 0.2% or less

The composition of constituents of the weld metal has to be one where the Pcm expressed by the following formula becomes 0.2% or less. The %X in the formula means the content (mass%) of the element X in the weld metal (same in following explanation). Further, an element not added to the weld metal is counted as zero (same in following

explanation).

$$Pcm=\%C+\%Si/30+(\%Mn+\%Cu+\%Cr)/20+\%Ni/60+\%Mo/15+\%V/10+5\%B$$

Pcm is called the weld sensitivity and quantitatively evaluates the effects of the chemical constituents of the steel material on the low temperature cracking. If Pcm is over 0.2%, low temperature cracking easily occurs, so the upper limit is made 0.2%.

Ceq: 0.35 to 0.45%

The composition of constituents of the weld metal has to be one where the Ceq expressed by the following formula becomes 0.35 to 0.45%.

$$Ceq=\%C+\%Mn/6+(\%Cr+\%Mo+\%V)/5+(\%Ni+\%Cu)/15$$

Regarding the hardenability due to the effect of weld heat of the base metal, Ceq is obtained by respectively converting the hardenabilities of the different alloy elements to amounts of C and totaling them up. To make the weld metal reach the desired tensile strength, Ceq is controlled to 0.35 to 0.45%. Preferably, Ceq is made 0.40 to 0.43%.

$$\alpha': -20\leq\alpha'\leq40$$

The composition of constituents of the weld metal of the weld joint has to have an $\alpha'$ expressed by the following formula of -20 to 40.

$$\alpha'=(1.5\times(\%O-0.89\%Al)+3.4\times\%N-\%Ti)\times1000$$

$\alpha'$ is a parameter showing the effective ability to form acicular ferrite based on the stoichiometric ratios of Al, O, and Ti, N. By controlling $\alpha'$ to -20 to 40 in range, the ability to form acicular ferrite is improved.
If $\alpha'$ is less than -20, either of the amounts of Al and Ti becomes excessively large or the amounts of N and O become excessively small, so the ability to form acicular ferrite remarkably decreases. If $\alpha'$ is over 40, either of the amounts of Al and Ti becomes excessively small or the amounts of N and O become excessively large, so the ability to form acicular ferrite remarkably decreases.

%Al/%O: 0.30 to 0.80

%Al/%O is the ratio of the amount of Al and the amount of O and is an indicator showing the oxygen potential after the end of deoxidation of the aluminum. By controlling %Al/%O to 0.3 to 0.80, the amount of formation of acicular ferrite can be raised.
If the %Al/%O ratio is less than 0.30, the amount of O becomes excessively large and dissolved oxygen not forming Ti oxides lowers the cleanliness of the steel, so the toughness falls. On the other hand, if %Al/%O is over 0.80, the amount of Al becomes excessively large, the amount of O bonding with Ti is decreased, the Ti oxides acting as nuclei for acicular ferrite are decreased and the toughness falls. Accordingly, %Al/%O is made 0.30 to 0.80.
Next, the preferable metal structure of the weld metal will be explained.
If making the constituents and parameters of the weld metal the above ranges and welding steel plate having an X60 to X70 class strength by submerged arc welding by the weld heat input 15 to 110 kJ/cm, the metal structure of the weld metal becomes a structure mainly comprised of acicular ferrite. The UO steel pipe covered by the present invention has a plate thickness of 6 to 40 mm or so. To weld steel plate of such a thickness by submerged arc welding, the welding is performed by a weld heat input of 15 to 110 kJ/cm in range. This being so, the cooling rate of the weld metal is determined. The metal structure of the weld metal of the final pass becomes the following structure. The ratios shown below are area ratios.

Acicular ferrite: 70% or more

Acicular ferrite is a pin-shaped ferrite structure having Ti-based oxides as nuclei. The larger the ratio, the finer the units of fracture of the weld metal part. To obtain this effect, the acicular ferrite is preferably made 70% or more.

Grain boundary ferrite: 15% or less

The grain boundary ferrite is one type of brittle phase. It becomes the starting point of fracture and a cause of drop of the toughness. For this reason, the grain boundary ferrite is preferably made 15% or less.

Martensite-Austenite Constituent: 3% or less

A martensite-austenite constituent is one type of brittle phase. It is extremely high in hardness, so becomes the starting point of fracture and a cause of drop of the toughness. For this reason, martensite-austenite constituent are preferably made 3% or less.

EBSD grain size: 10 $\mu$m or less

The EBSD (electron back scatter diffraction) particle size is the size of crystal grains forming the basis for the units of fracture. If the EBSD grain size is 10 $\mu$m or less, the units of fracture become finer. This is preferable from the viewpoint of securing toughness at low temperature.

By making the weld metal one with constituents satisfying the above condition and welding by a weld heat input of 15 to 110 kJ/cm, it is possible to obtain a submerged arc welded joint with a tensile strength of the weld metal of 480 to 620 MPa and a Charpy absorption energy at -10°C of the weld metal measured in accordance with JIS Z2242 of 100J or more.

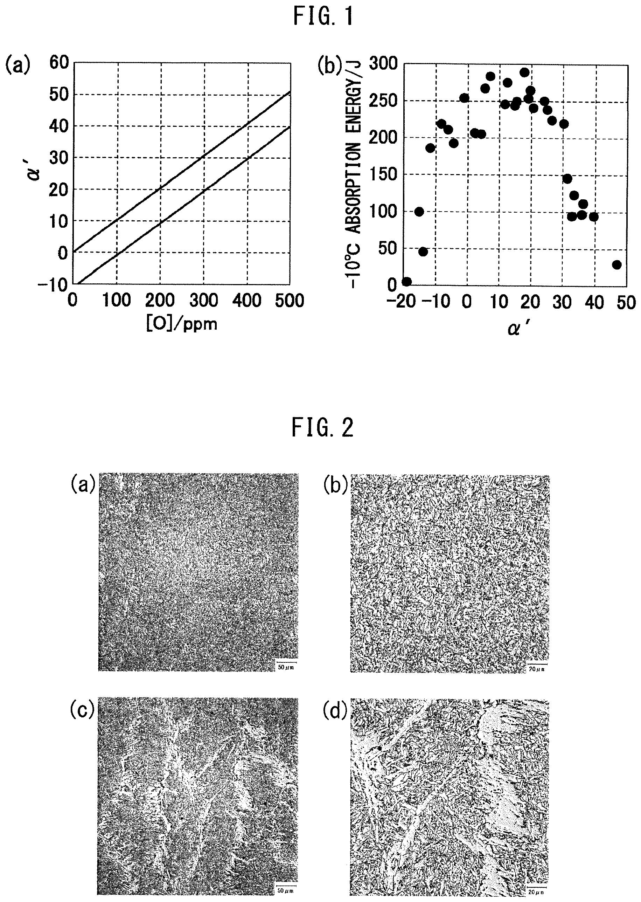

The low temperature toughness differs depending on the parameter $\alpha'$ showing the effective ability to form acicular ferrite. There is a more preferable range of $\alpha'$ depending on the concentration of oxygen in the weld metal. Specifically, it is preferable that $1000 \times \%O - 10 \leq \alpha' \leq 1000 \times \%O + 1$ (FIG. 1). By adjusting $\alpha'$ to this range, the ability to form acicular ferrite is improved, the low temperature toughness is improved, and a submerged arc welded joint with a Charpy absorption energy at $1300 \times \%O - 60(°C)$ of 100J or more can be obtained.

Further, by making the weld metal one with constituents satisfying the above condition and welding it by a weld heat input of 15 to 110 kJ/cm, the hardness of the weld metal becomes larger than the hardness of the base metal. Preferably, the difference becomes 10 Hv or more in terms of Vickers hardness. Furthermore, the tensile strength of the weld metal preferably becomes 1.05 times or more of the tensile strength of the base metal.

The base metal is not particularly limited in structure so long as steel plate having a X60 to X70 class strength (steel plate with a tensile strength of the base metal of 480 to 620 MPa). Below, the constituents of the steel plate having a strength of the X60 to X70 class suitable as the base metal of the longitudinal seam welded steel pipe of the present invention will be shown.

C: 0.01 to 0.1%

C is effective for improving the strength of steel and is included in 0.01% or more. If the amount of C is too large, the low temperature toughness of the base metal and HAZ deteriorate and, further, the weldability deteriorates, so the amount of C is made 0.1% or less. Preferably, the content is 0.03 to 0.07%.

Si: less than 0.5%

Si is an element required for deoxidation. If the amount of Si is large, martensite-austenite constituent easily form, and the low temperature toughness is made to remarkably deteriorate, so the amount of Si is made less than 0.5%. Preferably, the content is less than 0.35%. The deoxidation is also performed by Al and Ti, so addition of Si is not essential.

Mn: 0.5 to 2.0%

Mn acts as an element improving hardenability. To obtain this effect, 0.5% or more is included. If the amount of Mn is large, the hardenability of the steel increases and the HAZ toughness and weldability deteriorate. Furthermore, center segregation of the continuous cast steel slab is aided and the base metal deteriorates in low temperature toughness, so the amount of Mn is made 2.0% or less. Preferably, the content is 1.0 to 1.8%.

P: 0.015% or less

S: 0.01% or less

P and S are both impurities and elements causing deterioration of the toughness of the joint. The contents of these are preferably as low as possible. P is made 0.015% or less, while S is made 0.01% or less. Preferably, P is 0.008% or less. Preferably, S is 0.003% or less.

Al: less than 0.01%

Al is an element usually used as a deoxidizing agent and contained in the steel material. If the amount of Al becomes greater, the Al-based nonmetallic inclusions increase, the cleanliness of the steel material falls, and the toughness deteriorates, so the content is made less than 0.01%.

Ti: 0.005 to 0.03%

Ti forms fine TiN in the steel. These alone or as composite inclusions with Mg ($MgAl_2O_4$) oxides act as pinning particles. As a result, coarsening of the austenite grains of the HAZ is suppressed, the microstructure is refined, and the low temperature toughness is improved. To obtain this effect, Ti is included in 0.005% or more. If the amount of Ti becomes greater, the Ti oxides agglomerate and coarsen and the toughness deteriorates, so the amount of Ti is made 0.03% or less. Preferably, the content is 0.01 to 0.02%.

N: 0.002 to 0.006%

N is an element bonding with Ti to form TiN and is included in 0.002% or more. If the amount of N is large, the solid solution N not bonded with the Ti lowers the toughness, so the amount of N is made 0.006% or less. Preferably, the content is 0.003 to 0.005%.

O: 0.005% or less

O is an element forming pinning particles. However, if O is included, the cleanliness of the steel falls, so the smaller the content the better. The content is made 0.005% or less. Preferably, the content is 0.003% or less.

Mg: 0 to 0.01%

Mg is an element forming inclusions such as $MgAl_2O_4$ and MgS. $MgAl_2O_4$ precipitates on the TiN. These inclusions act as pinning particles. They suppress coarsening of the austenite grains of the HAZ to refine the microstructure and improve the low temperature toughness. If the amount of Mg becomes greater, the effect becomes saturated. Mg does not necessarily have to be contained in the base metal of the longitudinal seam welded steel pipe. The preferable amount of Mg is 0 to 0.01%.

Ca: 0 to 0.005%

Ca is an element controlling the morphology of the sulfide-based inclusions and improving the low temperature toughness. If the amount of Ca is large, the CaO-CaS become large clusters or inclusions which are liable to have a detrimental effect on the toughness. Ca does not necessarily have to be contained in the base metal of the longitudinal seam welded steel pipe. The preferable amount of Ca is 0 to 0.005%.

Ni: 0 to 0.6%

Ni is an element able to raise the strength of the base metal without causing a drop in the toughness. If the amount of Ni becomes greater, the effect becomes saturated. Ni does not necessarily have to be contained in the base metal of the longitudinal seam welded steel pipe. The preferable amount of Ni is 0 to 0.6%.

Cr: 0 to 0.5%

Cr is an element able to improve the strength of the base metal. If the amount of Cr becomes greater, the effect becomes saturated. Cr does not necessarily have to be contained in the base metal of the longitudinal seam welded steel pipe. The preferable amount of Cr is 0 to 0.5%.

Cu: 0 to 0.5%

Cu is an element able to improve the strength of the base metal. If the amount of Cu increases, the effect becomes saturated. Cu does not necessarily have to be contained in the base metal of the longitudinal seam welded steel pipe. The preferable amount of Cu is 0 to 0.5%.

Mo: 0 to 0.4%

Mo is an element able to improve the strength of the base metal. If the amount of Mo becomes greater, the effect becomes saturated and the toughness falls. Mo does not necessarily have to be contained in the base metal of the longitudinal seam welded steel pipe. The preferable amount of Mo is 0 to 0.4%.

Nb: 0 to 0.060%

Nb is an element improving the strength of the base metal. If the amount of Nb becomes greater, the martensite-austenite constituent more easily form and the toughness falls. Nb does not necessarily have to be contained in the base metal of the longitudinal seam welded steel pipe. The preferable amount of Nb is 0 to 0.40%.

B: 0 to 0.002%

B is an element effective for improvement of the hardenability of the base metal and suppression of formation of grain boundary ferrite. If the amount of B becomes greater, the effect becomes saturated. B does not necessarily have to be contained in the base metal of the longitudinal seam welded steel pipe. The preferable amount of B is 0 to 0.002%.

V: 0 to 0.06%

V is an element improving the strength of the base metal. If the amount of V becomes greater, the yield ratio can be raised by the precipitation hardening. V does not necessarily have to be contained in the base metal of the longitudinal seam welded steel pipe. The preferable amount of V is 0 to 0.06%.
The balance of elements other than those explained above is comprised of Fe and impurities. The impurities mean constituents contained in the raw materials or entering in the process of manufacture and not intentionally included in the steel.
Specifically, P, S, O, Sb, Sn, W, Co, As, Pb, Bi, and H may be mentioned. Among these, P, S, and O are preferably controlled so as to become the above preferable ranges.
Regarding other elements, usually Sb, Sn, W, Co, and As can enter in 0.1% or less, Pb and Bi can enter in 0.005% or less, and H can enter in 0.0005% or less as unavoidable impurities, but do not particularly have to be controlled if in the usual ranges.
The method of production of the steel plate used as the base metal is not particularly limited. A general method of production of steel plate having a strength of the X60 to X70 class may be used. A longitudinal seam welded steel pipe is obtained by joining the ends of thick steel plate serving as the base metal having a thickness of 6 to 40 mm or so by submerged arc welding. UOE steel pipe and JCOE steel pipe are examples of this.
The welding method will be explained in detail.
First, the above thick steel plate is formed with a groove of a predetermined shape. The shape of the groove is not particularly limited. A longitudinal seam welded steel pipe can be produced by forming a groove shape enabling welding from the two top and bottom surfaces of the end parts of the thick steel plate, for example, an X-shaped groove, making the end parts abut, completing the submerged arc welding from the inside surface side, then performing submerged arc welding from the outside surface side in the longitudinal direction.
Further, flux is spread inside the groove and steel wire for submerged arc welding use is used to join the ends by large heat input submerged arc welding by a heat input of 15 to 110 kJ/cm. The flux and steel wire are not particularly limited. Known ones may be used. If using steel wire, as the flux, known bond flux, melt flux, etc. may be used. If possible to obtain the above constituents of the weld metal by this, weld metal excellent in toughness is obtained. Further, according to need, the flux may also be preheated before welding.
The method of submerged arc welding is not particularly limited. Multielectrode submerged arc welding is included. Any known welding method may be applied. The welding conditions are also not particularly limited.

EXAMPLES

Next, examples of the present invention will be explained. The conditions in the examples are illustrations of conditions employed for confirming the workability and effects of the present invention. The present invention is not limited to these illustration of conditions. The present invention can employ various conditions so long as not deviating from the gist of the present invention and achieving the object of the present invention.

Steel materials of various compositions of constituents were smelted and refined. The molten steel was continuously cast into slabs. These were heated to 1100°C, then hot rolled. The finishing temperature of the hot rolling was made 780°C. The steels were air cooled down to 750°C, then water cooled from 750°C down to ordinary temperature to thereby prepare steel plates with various compositions of constituents and strengths of the X60 to X70 class. Table 1 shows the thicknesses, the compositions of constituents, and the tensile strengths of the steel plates.

[Table 1]

| Steel plate | Plate thickness (mm) | Chemical constituents (mass%) | | | | | | | | | | | | | | | | | Ceq | Pcm | TS (MPa) |
|---|---|---|---|---|---|---|---|---|---|---|---|---|---|---|---|---|---|---|---|---|---|---|
| | | C | Si | Mn | P | S | Al | Ti | N | O | Mg | Ca | Cu | Ni | Cr | Mo | V | Nb | B | | | |
| A | 38 | 0.061 | 0.170 | 1.62 | 0.007 | 0.0023 | 0.003 | 0.012 | 0.0043 | 0.0023 | 0.0019 | | 0.14 | 0.12 | 0.14 | 0.09 | | 0.020 | | 0.39 | 0.17 | 552 |
| B | 15 | 0.045 | 0.200 | 1.59 | 0.010 | 0.0020 | 0.005 | 0.015 | 0.0040 | 0.0020 | | | 0.40 | 0.40 | | | 0.003 | 0.012 | 0.0008 | 0.36 | 0.16 | 490 |
| C | 40 | 0.095 | 0.150 | 0.60 | 0.008 | 0.0030 | 0.003 | 0.008 | 0.0022 | 0.0021 | | 0.0010 | | 0.40 | 0.45 | 0.20 | | 0.015 | | 0.35 | 0.17 | 512 |
| D | 30 | 0.059 | 0.030 | 1.53 | 0.007 | 0.0020 | 0.009 | 0.020 | 0.0044 | 0.0020 | | | | | 0.20 | 0.30 | | 0.020 | | 0.41 | 0.17 | 580 |
| E | 35 | 0.069 | 0.125 | 1.70 | 0.008 | 0.0030 | 0.003 | 0.012 | 0.0034 | 0.0021 | | 0.0010 | 0.16 | 0.15 | 0.07 | | | 0.022 | | 0.39 | 0.17 | 542 |
| F | 25 | 0.065 | 0.120 | 1.21 | 0.008 | 0.0030 | 0.004 | 0.005 | 0.0040 | 0.0020 | | | 0.30 | 0.30 | 0.30 | | | 0.013 | | 0.37 | 0.16 | 513 |
| G | 25 | 0.030 | 0.045 | 1.41 | 0.007 | 0.0020 | 0.003 | 0.012 | 0.0042 | 0.0025 | | | | 0.30 | | 0.25 | 0.010 | 0.050 | | 0.34 | 0.12 | 502 |
| H | 32 | 0.065 | 0.170 | 1.00 | 0.010 | 0.0020 | 0.006 | 0.025 | 0.0058 | 0.0020 | 0.0090 | 0.0045 | 0.45 | 0.45 | | 0.30 | 0.003 | 0.015 | | 0.35 | 0.17 | 493 |
| I | 6 | 0.012 | 0.200 | 1.80 | 0.009 | 0.0030 | 0.005 | 0.009 | 0.0039 | 0.0019 | | | | | 0.30 | | | | | 0.37 | 0.12 | 521 |
| J | 35 | 0.049 | 0.150 | 1.32 | 0.012 | 0.0020 | 0.003 | 0.013 | 0.0034 | 0.0045 | | | 0.45 | 0.45 | | | | 0.015 | | 0.33 | 0.15 | 501 |
| K | 20 | 0.040 | 0.130 | 1.20 | 0.007 | 0.0002 | 0.002 | 0.012 | 0.0040 | 0.0020 | | 0.0020 | 0.20 | 0.35 | 0.30 | 0.20 | | 0.020 | | 0.38 | 0.15 | 527 |
| L | 18 | 0.045 | 0.200 | 1.30 | 0.007 | 0.0005 | 0.003 | 0.009 | 0.0035 | 0.0022 | 0.0010 | 0.0025 | | 0.50 | | 0.25 | | 0.015 | | 0.35 | 0.14 | 523 |
| M | 20 | 0.055 | 0.173 | 1.75 | 0.007 | 0.0009 | 0.003 | 0.012 | 0.0037 | 0.0023 | 0.0020 | 0.0022 | 0.01 | 0.01 | 0.19 | | | 0.019 | | 0.39 | 0.16 | 580 |
| N | 18 | 0.031 | 0.180 | 1.25 | 0.006 | 0.0006 | 0.002 | 0.011 | 0.0034 | 0.0020 | | 0.0030 | | 0.35 | 0.25 | 0.30 | 0.050 | 0.020 | | 0.38 | 0.14 | 502 |

Next, an X-shaped groove was formed in each fabricated steel plate. This was shaped into a tube and welded by submerged arc welding at the inside surface side and outside surface side of the tube in that order using a known wire and flux to obtain a UO steel pipe. At the time of welding, the weld speed etc. were adjusted to give a heat input of 65 kJ/cm or so. The compositions of constituents of each steel plate and weld metal are shown using Tables 2 to 4.

[Table 2]

| | Steel plate | Chemical constituents (mass%) | | | | | | | | | | | | | | | | | | | |
|---|---|---|---|---|---|---|---|---|---|---|---|---|---|---|---|---|---|---|---|---|---|
| | | C | Si | Mn | P | S | Al | Ti | N | O | B | Cu | Ni | Cr | Mo | V | Nb | Mg | Ceq | Pcm | Al/O | $\alpha'$ |
| Ex. 1 | A | 0.067 | 0.192 | 1.67 | 0.010 | 0.0030 | 0.0120 | 0.0130 | 0.0044 | 0.0180 | 0.0008 | 0.12 | 0.285 | 0.08 | 0.21 | | 0.011 | | 0.43 | 0.19 | 0.67 | 12.940 |
| Ex. 2 | A | 0.067 | 0.192 | 1.67 | 0.010 | 0.0030 | 0.0135 | 0.0300 | 0.0040 | 0.0190 | 0.0008 | 0.12 | 0.285 | 0.08 | 0.21 | | 0.011 | | 0.43 | 0.19 | 0.71 | -5.923 |
| Ex. 3 | B | 0.067 | 0.192 | 1.67 | 0.010 | 0.0030 | 0.0120 | 0.0160 | 0.0045 | 0.0180 | 0.0008 | 0.12 | 0.285 | 0.08 | 0.21 | | 0.011 | | 0.43 | 0.19 | 0.67 | 10.280 |
| Ex. 4 | A | 0.067 | 0.192 | 1.67 | 0.010 | 0.0030 | 0.0100 | 0.0070 | 0.0051 | 0.0230 | 0.0008 | 0.12 | 0.285 | 0.08 | 0.21 | | 0.011 | | 0.43 | 0.19 | 0.43 | 31.490 |
| Ex. 5 | A | 0.060 | 0.240 | 1.55 | 0.008 | 0.0024 | 0.0150 | 0.0175 | 0.0043 | 0.0280 | 0.0031 | 0.23 | 0.280 | 0.10 | 0.04 | 0.01 | 0.012 | | 0.38 | 0.19 | 0.54 | 19.095 |
| Ex. 6 | B | 0.060 | 0.240 | 1.55 | 0.008 | 0.0024 | 0.0240 | 0.0295 | 0.0035 | 0.0330 | 0.0031 | 0.23 | 0.280 | 0.10 | 0.04 | 0.01 | 0.012 | | 0.38 | 0.19 | 0.73 | -0.140 |
| Ex. 7 | A | 0.060 | 0.240 | 1.55 | 0.008 | 0.0024 | 0.0090 | 0.0210 | 0.0040 | 0.0270 | 0.0031 | 0.23 | 0.280 | 0.10 | 0.04 | 0.01 | 0.012 | | 0.38 | 0.19 | 0.33 | 21.085 |
| Ex. 8 | A | 0.060 | 0.240 | 1.55 | 0.008 | 0.0024 | 0.0120 | 0.0120 | 0.0044 | 0.0330 | 0.0031 | 0.23 | 0.280 | 0.10 | 0.04 | 0.01 | 0.012 | | 0.38 | 0.19 | 0.36 | 36.440 |
| Ex. 9 | A | 0.070 | 0.250 | 1.59 | 0.009 | 0.0020 | 0.0135 | 0.0280 | 0.0045 | 0.0440 | 0.0025 | 0.20 | 0.350 | 0.11 | 0.15 | | 0.012 | | 0.42 | 0.20 | 0.31 | 35.278 |
| Ex. 10 | B | 0.070 | 0.250 | 1.59 | 0.009 | 0.0020 | 0.0290 | 0.0390 | 0.0024 | 0.0400 | 0.0025 | 0.20 | 0.350 | 0.11 | 0.15 | | 0.012 | | 0.42 | 0.20 | 0.73 | -9.555 |
| Ex. 11 | A | 0.070 | 0.250 | 1.59 | 0.009 | 0.0020 | 0.0190 | 0.0180 | 0.0044 | 0.0370 | 0.0025 | 0.20 | 0.350 | 0.11 | 0.15 | | 0.012 | | 0.42 | 0.20 | 0.51 | 27.095 |
| Ex. 12 | A | 0.070 | 0.250 | 1.59 | 0.009 | 0.0020 | 0.0180 | 0.0150 | 0.0024 | 0.0390 | 0.0025 | 0.20 | 0.350 | 0.11 | 0.15 | | 0.012 | | 0.42 | 0.20 | 0.46 | 27.630 |
| Comp. Ex. 1 | A | 0.067 | 0.192 | 1.67 | 0.010 | 0.0030 | 0.0138 | 0.0390 | 0.0021 | 0.0174 | 0.0008 | 0.12 | 0.285 | 0.08 | 0.21 | | 0.011 | | 0.43 | 0.19 | 0.79 | -24.183 |
| Comp. Ex. 2 | A | 0.060 | 0.240 | 1.55 | 0.008 | 0.0024 | 0.0190 | 0.0390 | 0.0021 | 0.0240 | 0.0031 | 0.23 | 0.280 | 0.10 | 0.04 | 0.01 | 0.012 | | 0.38 | 0.19 | 0.79 | -21.225 |
| Comp. Ex. 3 | B | 0.060 | 0.240 | 1.55 | 0.008 | 0.0024 | 0.0130 | 0.0055 | 0.0055 | 0.0320 | 0.0031 | 0.23 | 0.280 | 0.10 | 0.04 | 0.01 | 0.012 | | 0.38 | 0.19 | 0.41 | 43.845 |
| Comp. Ex. 4 | A | 0.070 | 0.250 | 1.59 | 0.009 | 0.0020 | 0.0220 | 0.0399 | 0.0021 | 0.0280 | 0.0025 | 0.20 | 0.350 | 0.11 | 0.15 | | 0.012 | | 0.42 | 0.20 | 0.79 | -20.130 |
| Comp. Ex. 5 | A | 0.070 | 0.250 | 1.59 | 0.009 | 0.0020 | 0.0120 | 0.0190 | 0.0045 | 0.0490 | 0.0025 | 0.20 | 0.350 | 0.11 | 0.15 | | 0.012 | | 0.42 | 0.20 | 0.24 | 53.780 |

[Table 3]

(Continued from Table 2)

| | Steel plate | Chemical constituents (mass%) | | | | | | | | | | | | | | | | | | | |
|---|---|---|---|---|---|---|---|---|---|---|---|---|---|---|---|---|---|---|---|---|---|
| | | C | Si | Mn | P | S | Al | Ti | N | O | B | Cu | Ni | Cr | Mo | V | Nb | Mg | Ceq | Pcm | Al/O | α' |
| Ex. 13 | A | 0.064 | 0.200 | 1.57 | 0.010 | 0.0030 | 0.0120 | 0.0135 | 0.0038 | 0.0170 | 0.0008 | 0.15 | 0.310 | 0.13 | 0.14 | | 0.011 | | 0.41 | 0.18 | 0.71 | 8.900 |
| Ex. 14 | A | 0.040 | 0.120 | 1.80 | 0.010 | 0.0030 | 0.0120 | 0.0130 | 0.0042 | 0.0210 | 0.0020 | 0.40 | | 0.10 | | 0.01 | 0.011 | 0.002 | 0.39 | 0.17 | 0.57 | 16.760 |
| Ex. 15 | B | 0.095 | 0.150 | 1.57 | 0.010 | 0.0030 | 0.0150 | 0.0250 | 0.0038 | 0.0200 | | 0.15 | 0.310 | | | | 0.015 | | 0.39 | 0.19 | 0.75 | -2.105 |
| Ex. 16 | A | 0.035 | 0.120 | 1.75 | 0.010 | 0.0030 | 0.0120 | 0.0060 | 0.0044 | 0.0180 | 0.0008 | | | 0.30 | 0.14 | | 0.011 | | 0.41 | 0.15 | 0.67 | 19.940 |
| Ex. 17 | A | 0.060 | 0.240 | 1.63 | 0.008 | 0.0024 | 0.0120 | 0.0210 | 0.0041 | 0.0270 | 0.0031 | 0.40 | 0.400 | | | | 0.020 | | 0.39 | 0.19 | 0.44 | 17.420 |
| Ex. 18 | A | 0.065 | 0.180 | 0.80 | 0.008 | 0.0024 | 0.0100 | 0.0190 | 0.0044 | 0.0270 | 0.0031 | | | 0.50 | 0.35 | | 0.015 | | 0.37 | 0.17 | 0.37 | 23.110 |
| Ex. 19 | A | 0.030 | 0.240 | 1.63 | 0.008 | 0.0024 | 0.0080 | 0.0120 | 0.0038 | 0.0260 | 0.0031 | 0.40 | 0.400 | | 0.05 | 0.03 | 0.020 | | 0.37 | 0.17 | 0.31 | 29.240 |
| Ex. 20 | B | 0.080 | 0.220 | 1.30 | 0.008 | 0.0024 | 0.0110 | 0.0120 | 0.0044 | 0.0300 | 0.0025 | 0.35 | 0.300 | 0.25 | | 0.03 | 0.012 | | 0.40 | 0.20 | 0.37 | 33.275 |
| Ex. 21 | A | 0.061 | 0.200 | 1.60 | 0.009 | 0.0020 | 0.0140 | 0.0180 | 0.0042 | 0.0380 | 0.0020 | 0.15 | 0.300 | 0.20 | 0.19 | | 0.012 | | 0.44 | 0.19 | 0.37 | 34.590 |
| Ex. 22 | B | 0.035 | 0.200 | 1.65 | 0.009 | 0.0020 | 0.0150 | 0.0200 | 0.0040 | 0.0400 | 0.0020 | | | 0.20 | 0.19 | | 0.015 | 0.003 | 0.39 | 0.16 | 0.38 | 33.575 |
| Ex. 23 | A | 0.061 | 0.031 | 1.80 | 0.009 | 0.0020 | 0.0120 | 0.0170 | 0.0038 | 0.0380 | 0.0020 | 0.15 | 0.300 | 0.20 | | 0.01 | 0.012 | | 0.43 | 0.19 | 0.32 | 36.900 |
| Ex. 24 | A | 0.080 | 0.200 | 1.55 | 0.009 | 0.0020 | 0.0180 | 0.0170 | 0.0042 | 0.0370 | 0.0010 | 0.15 | 0.300 | | 0.15 | | 0.012 | | 0.40 | 0.19 | 0.49 | 28.750 |
| Comp. Ex. 6 | A | 0.050 | 0.110 | 1.80 | 0.010 | 0.0030 | 0.0120 | 0.0130 | 0.0042 | 0.0180 | 0.0005 | 0.40 | 0.500 | 0.20 | 0.13 | | 0.011 | | 0.48 | 0.19 | 0.67 | 12.260 |
| Comp. Ex. 7 | A | 0.070 | 0.400 | 1.65 | 0.010 | 0.0030 | 0.0120 | 0.0130 | 0.0038 | 0.0180 | 0.0034 | 0.15 | 0.270 | | 0.30 | 0.02 | 0.011 | | 0.44 | 0.22 | 0.67 | 10.900 |
| Comp. Ex. 8 | B | 0.064 | 0.120 | 1.57 | 0.010 | 0.0030 | 0.0250 | 0.0130 | 0.0038 | 0.0200 | | | | 0.310 | 0.13 | | 0.011 | | 0.37 | 0.16 | 1.25 | -3.455 |
| Comp. Ex. 9 | A | 0.064 | 0.120 | 1.57 | 0.010 | 0.0030 | 0.0060 | 0.0130 | 0.0038 | 0.0220 | 0.0008 | 0.15 | 0.310 | 0.13 | 0.14 | | 0.011 | | 0.41 | 0.18 | 0.27 | 24.910 |
| Comp. Ex. 10 | A | 0.055 | 0.240 | 1.75 | 0.008 | 0.0024 | 0.0190 | 0.0190 | 0.0043 | 0.0280 | 0.0010 | 0.15 | 0.280 | 0.10 | 0.40 | 0.01 | 0.012 | | 0.48 | 0.20 | 0.68 | 12.255 |
| Comp. Ex. 11 | A | 0.085 | 0.450 | 1.55 | 0.008 | 0.0024 | 0.0190 | 0.0190 | 0.0043 | 0.0280 | 0.0031 | 0.23 | 0.280 | 0.10 | 0.04 | 0.01 | 0.012 | | 0.41 | 0.22 | 0.68 | 12.255 |
| Comp. Ex. 12 | B | 0.060 | 0.240 | 1.55 | 0.008 | 0.0024 | 0.0270 | 0.0190 | 0.0043 | 0.0280 | 0.0031 | 0.23 | 0.280 | 0.10 | 0.04 | | 0.012 | 0.001 | 0.38 | 0.18 | 0.96 | 1.575 |
| Comp. Ex. 13 | A | 0.060 | 0.240 | 1.55 | 0.008 | 0.0024 | 0.0080 | 0.0190 | 0.0043 | 0.0320 | 0.0031 | 0.23 | 0.280 | 0.10 | 0.04 | 0.01 | 0.012 | | 0.38 | 0.19 | 0.25 | 32.940 |
| Comp. Ex. 14 | A | 0.035 | 0.200 | 0.51 | 0.009 | 0.0020 | 0.0150 | 0.0200 | 0.0040 | 0.0380 | | | 0.35 | 0.350 | 0.30 | 0.40 | 0.012 | | 0.31 | 0.13 | 0.39 | 30.575 |
| Comp. Ex. 15 | B | 0.095 | 0.450 | 1.60 | 0.009 | 0.0020 | 0.0150 | 0.0200 | 0.0040 | 0.0350 | 0.0034 | | | 0.40 | | | 0.012 | | 0.44 | 0.23 | 0.43 | 26.075 |
| Comp. Ex. 16 | A | 0.061 | 0.200 | 1.60 | 0.009 | 0.0020 | 0.0290 | 0.0200 | 0.0040 | 0.0360 | 0.0020 | 0.15 | 0.300 | 0.20 | 0.19 | | 0.012 | | 0.44 | 0.19 | 0.81 | 8.885 |
| Comp. Ex. 17 | A | 0.061 | 0.200 | 1.60 | 0.009 | 0.0020 | 0.0080 | 0.0200 | 0.0040 | 0.0380 | 0.0020 | 0.15 | 0.300 | 0.20 | 0.19 | | 0.012 | | 0.44 | 0.19 | 0.21 | 39.920 |

[Table 4]

(Continued from Table 3)

| | Steel plate | Chemical constituents (mass%) | | | | | | | | | | | | | | | | | | | |
|---|---|---|---|---|---|---|---|---|---|---|---|---|---|---|---|---|---|---|---|---|---|
| | | C | Si | Mn | P | S | Al | Ti | N | O | B | Cu | Ni | Cr | Mo | V | Nb | Mg | Ceq | Pcm | Al/O | α' |
| Comp. Ex. 18 | A | 0.020 | 0.200 | 1.57 | 0.010 | 0.0030 | 0.0120 | 0.0135 | 0.0038 | 0.0170 | 0.0008 | 0.15 | 0.310 | 0.13 | 0.14 | | 0.011 | | 0.37 | 0.14 | 0.71 | 8.900 |
| Comp. Ex. 19 | A | 0.150 | 0.120 | 1.40 | 0.010 | 0.0030 | 0.0120 | 0.0130 | 0.0042 | 0.0210 | 0.0020 | 0.40 | | 0.02 | | 0.01 | 0.011 | 0.002 | 0.42 | 0.26 | 0.57 | 16.760 |
| Comp. Ex. 20 | A | 0.060 | 0.240 | 1.63 | 0.008 | 0.0024 | 0.0060 | 0.0210 | 0.0041 | 0.0120 | 0.0031 | 0.40 | 0.400 | | | | 0.015 | | 0.39 | 0.19 | 0.50 | 2.930 |
| Comp. Ex. 21 | A | 0.055 | 0.180 | 1.70 | 0.008 | 0.0024 | 0.0190 | 0.0270 | 0.0044 | 0.0600 | 0.0031 | | | 0.50 | 0.02 | | 0.012 | | 0.44 | 0.19 | 0.32 | 52.595 |
| Comp. Ex. 22 | A | 0.060 | 0.240 | 1.63 | 0.008 | 0.0024 | 0.0120 | 0.0030 | 0.0041 | 0.0270 | 0.0031 | 0.40 | 0.400 | | | | 0.015 | | 0.39 | 0.19 | 0.44 | 35.420 |
| Comp. Ex. 23 | A | 0.055 | 0.180 | 1.70 | 0.008 | 0.0024 | 0.0100 | 0.0500 | 0.0044 | 0.0270 | 0.0031 | | | 0.50 | 0.02 | | 0.012 | | 0.44 | 0.19 | 0.37 | -7.890 |
| Comp. Ex. 24 | A | 0.045 | 0.200 | 1.57 | 0.010 | 0.0030 | 0.0400 | 0.0135 | 0.0038 | 0.0540 | 0.0008 | 0.15 | 0.310 | 0.13 | 0.14 | | 0.011 | 0.002 | 0.39 | 0.16 | 0.74 | 27.020 |
| Comp. Ex. 25 | A | 0.045 | 0.200 | 1.57 | 0.010 | 0.0030 | 0.0120 | 0.0135 | 0.0080 | 0.0170 | 0.0008 | 0.15 | 0.310 | 0.13 | 0.14 | | 0.011 | | 0.39 | 0.16 | 0.71 | 23.180 |
| Ex. 25 | C | 0.052 | 0.150 | 1.35 | 0.010 | 0.0020 | 0.0080 | 0.0080 | 0.0048 | 0.0160 | | 0.35 | 0.300 | 0.25 | | 0.03 | 0.012 | | 0.38 | 0.16 | 0.50 | 21.640 |
| Ex. 26 | D | 0.065 | 0.230 | 1.20 | 0.009 | 0.0024 | 0.0120 | 0.0130 | 0.0035 | 0.0220 | | 0.15 | 0.300 | 0.35 | 0.30 | | 0.012 | | 0.43 | 0.18 | 0.55 | 15.880 |
| Ex. 27 | E | 0.053 | 0.480 | 1.40 | 0.008 | 0.0024 | 0.0140 | 0.0150 | 0.0025 | 0.0190 | 0.0001 | | | 0.40 | 0.30 | | 0.015 | | 0.43 | 0.18 | 0.74 | 3.310 |
| Ex. 28 | F | 0.045 | 0.200 | 1.41 | 0.010 | 0.0030 | 0.0130 | 0.0080 | 0.0045 | 0.0200 | | 0.25 | 0.300 | 0.30 | | 0.01 | 0.012 | 0.001 | 0.38 | 0.16 | 0.65 | 19.945 |
| Ex. 29 | G | 0.070 | 0.120 | 1.00 | 0.012 | 0.0030 | 0.0140 | 0.0120 | 0.0038 | 0.0250 | 0.0030 | 0.40 | 0.450 | 0.30 | 0.15 | | 0.012 | | 0.38 | 0.19 | 0.56 | 19.730 |
| Ex. 130 | H | 0.061 | 0.180 | 1.21 | 0.010 | 0.0030 | 0.0125 | 0.0200 | 0.0045 | 0.0280 | 0.0001 | 0.40 | 0.500 | 0.20 | 0.13 | | 0.011 | | 0.39 | 0.18 | 0.45 | 20.613 |
| Ex. 31 | I | 0.060 | 0.090 | 1.85 | 0.010 | 0.0030 | 0.0180 | 0.0090 | 0.0030 | 0.0300 | 0.0005 | 0.15 | 0.310 | 0.13 | 0.14 | | 0.011 | 0.002 | 0.45 | 0.19 | 0.60 | 22.170 |
| Ex. 32 | J | 0.051 | 0.300 | 1.34 | 0.011 | 0.0024 | 0.0100 | 0.0100 | 0.0038 | 0.0250 | 0.0020 | 0.40 | | 0.10 | 0.30 | 0.01 | 0.011 | | 0.38 | 0.18 | 0.40 | 27.070 |
| Ex. 33 | K | 0.068 | 0.210 | 1.42 | 0.010 | 0.0024 | 0.0150 | 0.0130 | 0.0044 | 0.0350 | | | 0.50 | 0.550 | | | 0.011 | | 0.37 | 0.18 | 0.43 | 34.435 |
| Ex. 34 | L | 0.039 | 0.230 | 1.50 | 0.012 | 0.0024 | 0.0250 | 0.0200 | 0.0029 | 0.0540 | | 0.40 | | 0.30 | 0.21 | | 0.012 | | 0.42 | 0.17 | 0.46 | 37.485 |
| Ex. 35 | M | 0.050 | 0.250 | 1.49 | 0.010 | 0.0024 | 0.0120 | 0.0180 | 0.0035 | 0.0400 | 0.0002 | 0.40 | 0.450 | | 0.25 | 0.01 | 0.012 | | 0.41 | 0.18 | 0.30 | 37.880 |
| Ex. 36 | N | 0.055 | 0.340 | 1.45 | 0.010 | 0.0024 | 0.0150 | 0.0220 | 0.0040 | 0.0380 | 0.0010 | | | 0.50 | | | 0.012 | | 0.40 | 0.17 | 0.39 | 28.575 |

After the submerged arc welding, the area ratios (%) of the weld metal structure (total of acicular ferrite, grain boundary ferrite, and martensite-austenite constituent), the EBSD grain size of the weld metal part, the tensile strength of the weld metal, the difference of hardness of the weld metal and the base metal, and the absorption energy of the Charpy impact test were measured. Tables 5 to 7 show the results. The AF ratio, GBF ratio, and MA ratio in Tables 5 to 7 respectively show the area ratios of the acicular ferrite, grain boundary ferrite, martensite-austenite constituent in the weld metal structure.

[Table 5]

|  | AF ratio | GBF ratio | MA ratio | EBSD grain size | TS (WM) | ΔH (Hv) | -10°C absorption energy (J) | Charpy absorption energy (J) |
|---|---|---|---|---|---|---|---|---|
| Ex. 1 | 96.1 | 2.3 | 1.2 | 3.2 | 602 | 17 | 243 | 201 (@-45°C) |
| Ex.2 | 83.5 | 10.3 | 1.3 | 7.6 | 613 | 20 | 185 | |
| Ex. 3 | 94.0 | 4.2 | 1.5 | 4.0 | 602 | 38 | 235 | 192 (@-45°C) |
| Ex. 4 | 86.2 | 8.3 | 1.4 | 6.9 | 608 | 19 | 141 | |
| Ex. 5 | 91.3 | 5.3 | 1.3 | 5.1 | 585 | 11 | 225 | 185 (@-30°C) |
| Ex.6 | 78.5 | 14.3 | 1.9 | 8.9 | 535 | 15 | 175 | |
| Ex. 7 | 93.1 | 3.6 | 1.4 | 4.9 | 586 | 11 | 234 | 181 (@-30°C) |
| Ex. 8 | 82.2 | 12.5 | 1.5 | 6.7 | 585 | 11 | 153 | |
| Ex. 9 | 86.5 | 9.7 | 1.4 | 7.1 | 593 | 14 | 143 | 109 (@-20°C) |
| Ex. 10 | 75.9 | 14.5 | 1.6 | 9.5 | 593 | 35 | 110 | |
| Ex. 11 | 84.5 | 9.8 | 1.5 | 6.8 | 606 | 18 | 139 | 105 (@-20°C) |
| Ex. 12 | 73.4 | 14.6 | 1.7 | 9.0 | 611 | 20 | 121 | |
| Comp. Ex. 1 | 68.5 | 17.9 | 1.8 | 12.5 | 602 | 17 | 88 | |
| Comp. Ex. 2 | 67.0 | 19.4 | 1.9 | 15.6 | 585 | 11 | 79 | |
| Comp. Ex. 3 | 69.4 | 20.9 | 1.8 | 20.4 | 535 | 15 | 81 | |
| Comp. Ex. 4 | 39.0 | 21.0 | 1.9 | 19.2 | 593 | 14 | 53 | |
| Comp. Ex. 5 | 59.4 | 19.8 | 2.1 | 22.5 | 593 | 14 | 42 | |

[Table 6]

(Continued from Table 5)

|  | AF ratio | GBF ratio | MA ratio | EBSD grain size | TS (WM) | ΔH (Hv) | -10°C absorption energy (J) | Charpy absorption energy (J) |
|---|---|---|---|---|---|---|---|---|
| Ex. 13 | 94.0 | 3.0 | 1.4 | 3.9 | 584 | 11 | 241 | 185 (@-45°C) |
| Ex. 14 | 87.4 | 8.7 | 1.2 | 4.9 | 590 | 13 | 235 | 181 (@-45°C) |
| Ex. 15 | 80.5 | 7.2 | 2.4 | 6.7 | 542 | 18 | 180 | |
| Ex. 16 | 84.3 | 6.2 | 1.5 | 5.9 | 611 | 19 | 232 | 171 (@-45°C) |
| Ex. 17 | 94.5 | 3.5 | 1.4 | 3.7 | 619 | 16 | 221 | 179(@-30°C) |
| Ex. 18 | 91.9 | 4.1 | 1.2 | 4.6 | 529 | 13 | 239 | 180 (@-30°C) |

(continued)

| (Continued from Table 5) | | | | | | | | |
|---|---|---|---|---|---|---|---|---|
| | AF ratio | GBF ratio | MA ratio | EBSD grain size | TS (WM) | ΔH (Hv) | -10°C absorption energy (J) | Charpy absorption energy (J) |
| Ex. 19 | 85.0 | 8.9 | 1.2 | 6.1 | 579 | 22 | 164 | |
| Ex. 20 | 89.5 | 5.0 | 2.2 | 6.0 | 611 | 11 | 171 | |
| Ex. 21 | 84.4 | 9.8 | 1.4 | 7.0 | 610 | 19 | 142 | 115 (@-20°C) |
| Ex. 22 | 86.8 | 8.7 | 1.2 | 6.9 | 543 | 18 | 150 | 103 (@-20°C) |
| Ex. 23 | 83.1 | 9.0 | 1.4 | 8.1 | 606 | 18 | 131 | 108 (@-20°C) |
| Ex. 24 | 80.5 | 10.5 | 2.4 | 9.0 | 598 | 15 | 132 | 106 (@-20°C) |
| Comp. Ex. 6 | 90.5 | 4.2 | 1.2 | 4.7 | 726 | 58 | 92 | |
| Comp. Ex. 7 | 91.0 | 3.8 | 2.8 | 4.9 | 647 | 32 | 89 | |
| Comp. Ex. 8 | 53.1 | 10.8 | 1.5 | 25.4 | 521 | 11 | 59 | |
| Comp. Ex. 9 | 60.1 | 15.9 | 1.2 | 21.0 | 584 | 11 | 41 | |
| Comp. Ex. 10 | 87.6 | 6.9 | 1.3 | 8.1 | 668 | 39 | 95 | |
| Comp. Ex. 11 | 88.1 | 7.2 | 1.4 | 6.0 | 625 | 24 | 96 | |
| Comp. Ex. 12 | 50.4 | 16.2 | 1.5 | 22.5 | 532 | 14 | 41 | |
| Comp. Ex. 13 | 55.9 | 20.3 | 1.2 | 24.0 | 585 | 11 | 33 | |
| Comp. Ex. 14 | 78.5 | 18.5 | 1.4 | 8.9 | 429 | -41 | 89 | |
| Comp. Ex. 15 | 83.3 | 9.8 | 3.2 | 8.3 | 648 | 53 | 92 | |
| Comp. Ex. 16 | 40.5 | 21.1 | 1.3 | 24.5 | 610 | 19 | 20 | |
| Comp. Ex. 17 | 52.4 | 25.5 | 1.2 | 23.0 | 610 | 19 | 18 | |

[Table 7]

| (Continued from Table 6) | | | | | | | | |
|---|---|---|---|---|---|---|---|---|
| | AF ratio | GBF ratio | MA ratio | EBSD grain size | TS (WM) | ΔH (Hv) | -10°C absorption energy (J) | Charpy absorption energy (J) |
| Comp. Ex. 18 | 81.0 | 11.0 | 1.5 | 7.8 | 513 | -13 | 89 | |
| Comp. Ex. 19 | 86.0 | 9.0 | 5.1 | 8.1 | 582 | 10 | 81 | |

(continued)

| (Continued from Table 6) | | | | | | | | |
|---|---|---|---|---|---|---|---|---|
| | AF ratio | GBF ratio | MA ratio | EBSD grain size | TS (WM) | ΔH (Hv) | -10°C absorption energy (J) | Charpy absorption energy (J) |
| Comp. Ex. 20 | 68.0 | 18.0 | 1.2 | 18.5 | 589 | 12 | 51 | |
| Comp. Ex. 21 | 71.0 | 11.0 | 1.3 | 9.5 | 619 | 22 | 80 | |
| Comp. Ex. 22 | 67.0 | 19.0 | 1.1 | 19.1 | 539 | 9 | 50 | |
| Comp. Ex. 23 | 73.0 | 10.0 | 1.3 | 9.4 | 619 | 36 | 71 | |
| Comp. Ex. 24 | 71.0 | 9.0 | 1.2 | 9.7 | 548 | 15 | 79 | |
| Comp. Ex. 25 | 80.0 | 8.0 | 1.4 | 8.9 | 588 | 22 | 76 | |
| Ex. 25 | 84.0 | 9.1 | 1.3 | 5.1 | 567 | 18 | 192 | |
| Ex. 26 | 94.0 | 2.5 | 1.2 | 4.8 | 625 | 15 | 241 | 180 (@-45°C) |
| Ex. 27 | 85.0 | 2.1 | 1.2 | 5.9 | 607 | 22 | 234 | |
| Ex. 28 | 80.0 | 10.5 | 1.1 | 5.2 | 570 | 19 | 229 | 178 (@-45°C) |
| Ex. 29 | 95.0 | 3.1 | 1.2 | 5.1 | 547 | 15 | 235 | 179 (@-30°C) |
| Ex. 30 | 94.0 | 2.5 | 1.3 | 4.5 | 554 | 20 | 229 | 171 (@-30°C) |
| Ex. 31 | 92.0 | 2.4 | 1.2 | 4.6 | 644 | 41 | 230 | 175 (@-30°C) |
| Ex. 32 | 88.0 | 8.5 | 1.3 | 5.9 | 546 | 15 | 175 | |
| Ex. 33 | 72.0 | 14.5 | 1.1 | 8.9 | 565 | 12 | 113 | 109 (@-20°C) |
| Ex. 34 | 85.0 | 9.1 | 1.2 | 9.1 | 625 | 34 | 121 | |
| Ex. 35 | 84.0 | 11.1 | 1.2 | 8.0 | 580 | 0 | 125 | 101 (@-20°C) |
| Ex. 36 | 73.0 | 14.7 | 1.2 | 9.5 | 565 | 21 | 109 | 105 (@-20°C) |

The absorption energy of the Charpy impact test was measured as follows.

At a cross-section of plate thickness parallel to a direction including the HAZ and the weld metal, a Charpy test piece was taken from the center of the weld metal part 2 mm below the surface layer of the steel plate. In accordance with JIS Z2242, a Charpy impact test was performed at -10°C to measure the absorption energy. The absorption energy was found by performing the Charpy impact test three times and obtaining the average value. A sample with a value of less than 100J was judged as poor in toughness. Some samples were also measured for Charpy absorption energy at a temperature of other than -10°C.

The area ratios of the structures were measured as follows:

A 1/2 part of the weld bead width at the t/4 position of thickness from the surface layer at the second pass was taken as a test piece. This was polished, then corroded by Nital corrosion and LePera corrosion. The revealed structure was observed by an optical microscope in a 1000 μm × 1000 μm range. 10 fields of the structure were measured. The obtained images were analyzed and the average area ratios of the structures were calculated.

The EBSD grain size was obtained by EBSD analysis of 20 fields in a range of 500 μm × 500 μm and averaging the crystal grain sizes when divided into sections of a crystal orientation difference of 15°.

As shown in Tables 5 to 7, the invention examples satisfying the composition of constituents of a welded joint of the present invention all had a Charpy absorption energy at - 10°C of 100J or more and an excellent toughness of the weld metal part.

As opposed to this, comparative examples not satisfying the composition of constituents of a welded joint of the present invention had a Charpy absorption energy at -10°C of less than 100J and a low toughness of the weld metal part and welded joint.

Further, in the invention examples, a high Charpy absorption energy was obtained in accordance with the amounts of O in the weld metal even at -20°C, -30°C, and -45°C.

FIG. 2 gives examples of structures of the weld metal. (a) and (b) show the structures of invention examples, while (c) and (d) show the structures of comparative examples. In the invention examples, it is learned that the structures of the weld metal are made finer.

INDUSTRIAL APPLICABILITY

According to the present invention, it is possible to provide longitudinal seam welded steel pipe excellent in toughness of the weld metal part even if joining thick steel plate by large heat input welding. Accordingly, the present invention is high in industrial applicability.

**Claims**

1.  A longitudinal seam welded steel pipe having weld zone welded at an inside surface and outside surface in a longitudinal direction,
    a chemical composition of a base metal of the steel pipe containing, by mass%,
    C: 0.01 to 0.1%,
    Si: less than 0.5%,
    Mn: 0.5 to 2.0%,
    P: 0.015% or less,
    S: 0.01% or less,
    Al: less than 0.01%,
    Ti: 0.005 to 0.03%,
    N: 0.002 to 0.006%,
    O: 0.005% or less,
    Mg: 0 to 0.01%,
    Ca: 0 to 0.005%,
    Ni: 0 to 0.6%,
    Cr: 0 to 0.5%,
    Cu: 0 to 0.5%,
    Mo: 0 to 0.4%,
    Nb: 0 to 0.06%,
    B: 0 to 0.002%,
    V: 0 to 0.06% and
    a balance of Fe and impurities,
    the tensile strength of the base metal being 480 to 620 MPa,
    a chemical composition of a weld metal of the steel pipe containing, by mass%,
    C: 0.03 to 0.1%,
    Si: 0.03 to 0.5%,
    Mn: 0.5 to 2.0%,
    P: 0.015% or less,
    S: 0.01% or less,
    Al: 0.001 to 0.03%,
    Ti: 0.005 to 0.04%,
    N: 0.002 to 0.006%,
    B: 0 to 0.035%,
    O: 0.015 to 0.055%,
    Ni: 0 to 0.6%,
    Cr: 0 to 0.5%,
    Cu: 0 to 0.5%,
    Mo: 0 to 0.4%,
    V: 0 to 0.06%,
    Ca: 0 to 0.005%,
    Mg: 0 to 0.01%,

Nb: 0 to 0.06% and
a balance of Fe and impurities,
wherein when %X expresses a content of an element X in the weld metal,
Pcm defined by Pcm=%C+%Si/30+(%Mn+%Cu+%Cr)/20+%Ni/60+ %Mo/15+%V/10+5%B is 0.2% or less,
Ceq defined by Ceq=%C+%Mn/6+(%Cr+%Mo+%V)/5+(%Ni+%Cu)/15 is 0.35 to 0.45%,
$\alpha$' defined by $\alpha$'=(1.5$\times$(%O-0.89%Al)+3.4$\times$%N-%Ti)x1000 is -20 to 40, and
%Al/%O is 0.3 to 0.8.

2. The longitudinal seam welded steel pipe according to claim 1, wherein the $\alpha$' satisfies 1000$\times$%O-10$\leq\alpha$'$\leq$1000$\times$%O+1.

3. The longitudinal seam welded steel pipe according to claim 1 or 2, wherein the structure of the weld metal comprises, by area ratio, acicular ferrite 70% or more, grain boundary ferrite 15% or less, and martensite-austenite constituent 3% or less, and has an EBSD grain size of 10 $\mu$m or less.

4. The longitudinal seam welded steel pipe according to any one of claims 1 to 3, wherein a tensile strength of the weld metal is 1.05 times or more of the tensile strength of the base metal.

5. The longitudinal seam welded steel pipe according to any one of claims 1 to 4, wherein the hardness of the weld metal is larger than the hardness of the base metal and the difference thereof is 10 Hv or more.

6. The longitudinal seam welded steel pipe according to any one of claims 1 to 5, wherein a Charpy absorption energy of the weld metal at -10°C is 100J or more.

7. The longitudinal seam welded steel pipe according to any one of claims 1 to 6, wherein a Charpy absorption energy of the weld metal at 1300$\times$%O-60(°C) is 100J or more.

# FIG. 1

# FIG. 2

## INTERNATIONAL SEARCH REPORT

| International application No. |
|---|
| PCT/JP2017/014134 |

| A. CLASSIFICATION OF SUBJECT MATTER |
|---|
| C22C38/00(2006.01)i, B23K35/30(2006.01)i, C22C38/14(2006.01)i, C22C38/58 (2006.01)i |

According to International Patent Classification (IPC) or to both national classification and IPC

| B. FIELDS SEARCHED |
|---|
| Minimum documentation searched (classification system followed by classification symbols) |
| C22C1/00-49/14, B23K35/30 |

Documentation searched other than minimum documentation to the extent that such documents are included in the fields searched

| Jitsuyo Shinan Koho | 1922–1996 | Jitsuyo Shinan Toroku Koho | 1996–2017 |
|---|---|---|---|
| Kokai Jitsuyo Shinan Koho | 1971–2017 | Toroku Jitsuyo Shinan Koho | 1994–2017 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2015-150597 A (Nippon Steel & Sumitomo Metal Corp.), 24 August 2015 (24.08.2015), claims; paragraph [0077]; tables 5, 8, 9 (Family: none) | 1-7 |
| A | JP 2015-150602 A (Nippon Steel & Sumitomo Metal Corp.), 24 August 2015 (24.08.2015), claims; paragraph [0089]; tables 5, 6, 11 (Family: none) | 1-7 |
| A | JP 2013-023714 A (JFE Steel Corp.), 04 February 2013 (04.02.2013), (Family: none) | 1-7 |

| ☒ Further documents are listed in the continuation of Box C. | ☐ See patent family annex. |
|---|---|

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 22 June 2017 (22.06.17) | 04 July 2017 (04.07.17) |

| Name and mailing address of the ISA/ | Authorized officer |
|---|---|
| Japan Patent Office 3-4-3,Kasumigaseki,Chiyoda-ku, Tokyo 100-8915,Japan | |
| | Telephone No. |

Form PCT/ISA/210 (second sheet) (January 2015)

**INTERNATIONAL SEARCH REPORT**

| International application No. |
|---|
| PCT/JP2017/014134 |

C (Continuation). DOCUMENTS CONSIDERED TO BE RELEVANT

| Category* | Citation of document, with indication, where appropriate, of the relevant passages | Relevant to claim No. |
|---|---|---|
| A | JP 2013-049895 A (JFE Steel Corp.), 14 March 2013 (14.03.2013), (Family: none) | 1-7 |
| A | JP 2013-204103 A (JFE Steel Corp.), 07 October 2013 (07.10.2013), (Family: none) | 1-7 |

Form PCT/ISA/210 (continuation of second sheet) (January 2015)

**EP 3 608 432 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013049895 A